# EUROPEAN PATENT APPLICATION

(11) **EP 2 355 499 A1**
(43) Date of publication of application: **10.08.2011**
(21) Application number: 09290953.0
(22) Date of filing: 16.12.2009
(51) Int. Cl.: H04N 7/14, H04N 7/15

(54) **Video conferencing method, a related system, a related client device and a related network element**

(71) Applicant: Alcatel Lucent, 75008 Paris (FR)
(72) Inventor: Moons, Jan Lode Mia, 2220 Heist-op-den-Berg (BE); Lou, Zhe, 2000 Antwerp (BE)
(74) Representative: Narmon, Gisèle Marie Thérèse

(57) **Abstract**

Video conferencing method for establishing a video conference between a plurality of participants where each of the participants is associated with a video conferencing client device. Each video conferencing client device comprises a screen with at least one camera and each of these cameras generates a video stream of the corresponding participant. Each of the video conferencing client devices is coupled to a video conferencing server device over a communications network. The method comprises the steps of:
a. determining a viewing direction of a first participant relative to a presentation of each other participant of the plurality of participants on the screen of the first participant;
b. generating a respective view of the first participant for each other participant of the plurality of participants based on the viewing direction of the first participant relative to a presentation of each other participant of the plurality of participants on the screen of the first participant;
c. distributing the respective view of the first participant to each other participant of the plurality of participants.

## Description

The present invention relates to a video conferencing method according to the preamble of claim 1, a related video conferencing system according to the preamble of claim 3, a related network element according to the preamble of claim 5 and a related client device according to the preamble of claim 9.

Currently, with recent development of the internet, video teleconference has become more popular for business as well as personal use. When a first participant of a teleconference looks at one of the other participants of the video-conference on his screen, the images taken by a camera, which is typically being put aside or on top of the screen, give an impression that the user is looking at somewhere else instead of looking at the other participants of the video-conference. Front view images can be taken only when the user is gazing at the camera. However, it is physically impossible to locate a camera behind the face image of the remote party on the monitor but usually it is located at an edge of the screen.

Since eye contact is an important factor in video teleconferencing, there have been many investigations to generate a face image with a front view and provide virtual eye contact by interpolating images taken from left and right side.

In case there are even more people then two people involved in a videoconference, with today's systems, people actually don't make eye contact when talking to each other because they are looking at their screens instead of looking into the camera which is normally located on the top or on the bottom of the computer screen.

Hence, a disadvantage of such systems is that communications between the participants does not support optimum face contact between each of the participants of the video-conference.

An objective of the present invention is to provide a video-conferencing method, a related system and related devices of the above known type but wherein the communication between all participants of such a video-conference supports an improved face-to-face communication with an improved eye-contact between all participants of the video-conference.

According to the invention, this object is achieved by the method for video conferencing according to claim 1, the system for video conferencing according to claim 3, the network element according to claim 5 and the client device according to claim 9.

Indeed, this objective is achieved due to the fact that the method for video conferencing according to the present invention first determines a viewing direction of a first participant relative to each other participant of the plurality of participants where each of the other participants is being represented at the screen of the first participant, based on the viewing direction of the first participant relative to each other participant of the plurality of participants and generating a respective view of the first participant for each other participant of the plurality of participants and subsequently distributing each such respective view of the first participant generated to each other participant of said plurality of participants.

Another characteristic feature of the present invention is described in claim 2, claim 4 and claim 10

The determining of the viewing direction is made by locating an eye gazing point of said first participant on said screen of said first participant and subsequently comparing the eye-gazing location of the first participant on the screen of the client device of the first participant with a window position of each other participant of the plurality of participants.

Further characterizing embodiments of the present video conferencing system, video conferencing method and related devices are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a functional representation of the video conferencing system wherein the implementation of the present invention is realized.
FIG. 2 represents the functional representation of the video conferencing system including the relevant functional blocks of the client device VCDA and relevant functional blocks of the server device SED of Fig.1.

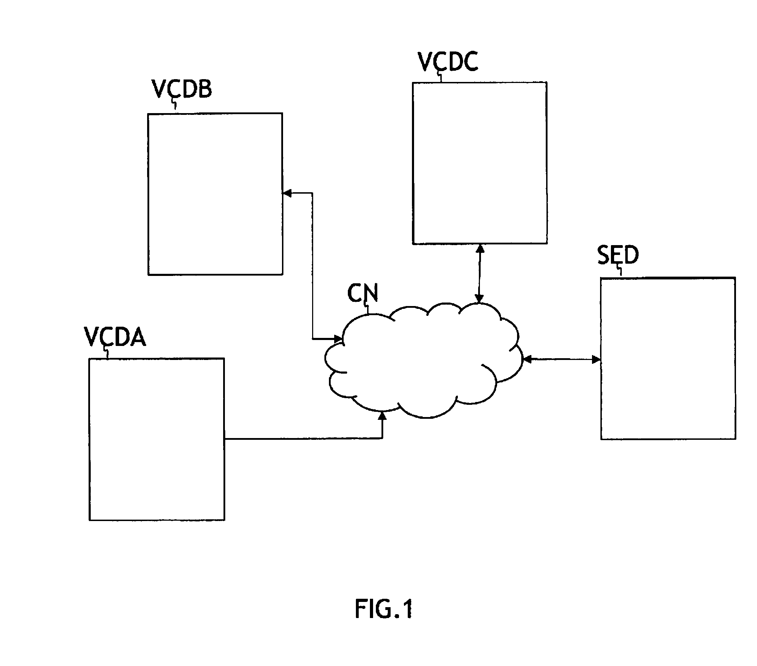

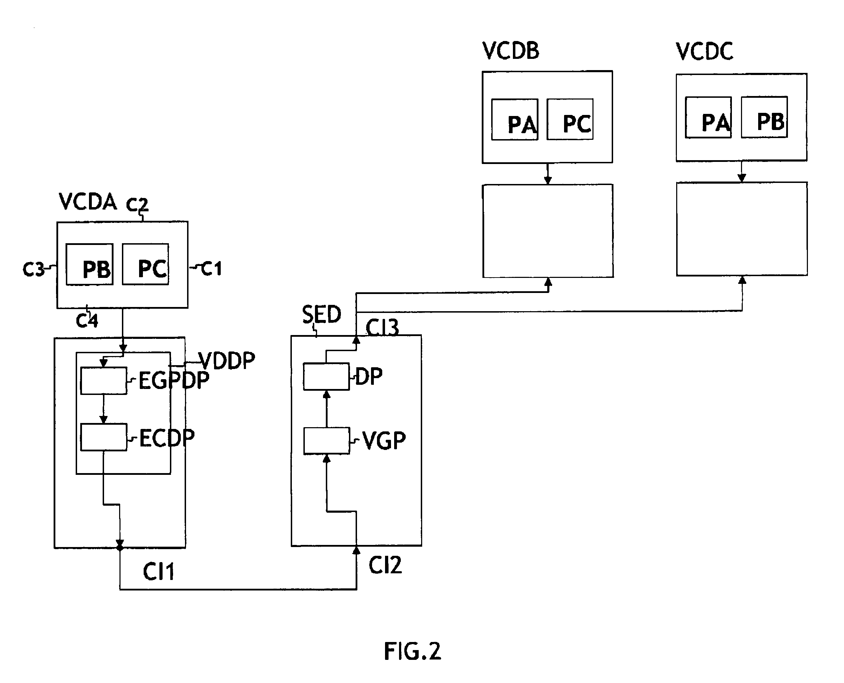

In the following paragraphs, referring to the drawings, an implementation of the method and the related devices according to the present invention will be described. In the first paragraph of this description the main elements of this video conferencing system as presented in FIG. 1 and FIG2 are described. In the second paragraph, connections between the before mentioned network elements and described means are defined. In the succeeding paragraph the actual execution of the method for video conferencing of the present invention is described.

Essential elements of this embodiment are a plurality of client devices VCDA, VCDB, VCDC for establishing and conducting a video conference call. For reasons of maintaining simplicity only three client devices are presented in the figures. Such a client device may be a personal computer with a screen and one or more cameras attached to the screen. The cameras may be mounted at four corners of the screen or any other suitable places. A further essential element of the present invention is the server device SED that couples each of the client devices VCDA, VCDB, VCDC. Such a server device is a video conferencing server, f.i. like RADVISION's SCOPIA® All client devices VCDA, VCDB, VCDC are coupled to the server device SED over a communications network CN which may be an internetwork including respective access networks and a core network or be any other networking system.

As shown in Fig. 2, the client device VCDA comprises a view direction determination part VDDP that is adapted to determine a viewing direction of a first participant (not shown) relative to a presentation of each of the other participants (also not shown) of the plurality of participants on the screen of the video conference client device VCDA of said first participant.

The view direction determination part VDDP of the video conferencing client device VCDA comprises an eye gazing point determination part EGPDP that is adapted to determine an eye gazing point of the first participant based on the at least one video stream capturing the first participant, the number of video streams being equal to the number of cameras.

The view direction determination part VDDP further includes an eye contact determination part ECDP that is adapted to determine eye contact of the first participant with each other participant of the plurality of participants by comparing said eye-gazing point of the first participant on the screen of the first participant with a window position of the presentation of each other participant of the plurality of participants on the screen of the first participant.

It is to be noted that each of the client devices VCDB, VCDC has a similar function structure as client device VCDA as described earlier.

The server device SED comprises a View Generating part VGP that is adapted to generate a respective view of the first participant for each other participant of the plurality of participants based on the viewing direction of the first participant relative to a presentation of each of the other participants of the plurality of participants on the screen of the video conference client device VCDA of the first participant, as determined by VDDP.

VGP is adapted to create/calculate for each participant a view based on the eye-gazing position of the first participant and the determined viewing direction, i.e. whether or not the first participant has eye-contact with an other participant of the plurality of participants, by applying the view-point interpolation. The view point interpolation technology enables to take in the video streams of the different cameras, e.g. 4 video streams from 4 cameras in this case, of a particular party and to calculate any view in between these two cameras. The calculated view/video stream looks as if it is taken by a virtual camera in between two given cameras.

Additionally the server Device SED may comprise a Distributing part DP that is adapted to distribute each of the respective views of the first participant generated to each other participant of said plurality of participants. The camera's attached to the screen of the video conferencing device, C1, C2, C3, C4, are coupled to the view direction determination part VDDP of the video conferencing client device VCDA and more specifically to an input of the eye gazing point determination part EDP, that in tum is coupled to the eye contact determination part ECDP that is coupled to a communication interface of the video conference client device VCDA, C1.

The View Generating part VGP of the server device SED is coupled with an input to a communications interface of the server device SED, C2. and to the view distributing part VDP that in turn is coupled to a further communications interface of the server device SED, Cl3. CI1 is coupled to CI2. Both, other video conferencing client devices VCDB. VCDC are coupled with a respective communications interface of the video conferencing client devices VCDB, VCDC to C13.

In order to explain the present invention it is assumed that there are 3 participants, A, B, C (not shown) involved in a videoconference. Further it is assumed that a first participant, participant A is looking at the screen of his video conference client device VDCA and has a window presentation PB of participant B and a presentation PC of participant C on his screen where both window presentations include streaming video of the respective participants. Further it is assumed that a video stream of participant A is presented at both the screens of video conferencing client device VCDB, VCDC of participants B and C.

Furthermore it is assumed that currently participant A is looking at the window presentation PB of participant B, i.e. a video stream of participant B, at the screen of his video conferencing client device VCDA.

Now the client device of participant A, VCDA, determines a viewing direction of the first participant A relative to a presentation of each other participants on the screen of the first participant which is dealt with by first by means of the eye gazing point determination part EGPDP in the view direction determination part VDDP, determining an eye gazing point of this first participant A based on the video streams of the of the camera's, C1, C2, C3, C4, attached to the screen of video conferencing client device VCDA.

This eye gazing point is determined from the input video streams of this first participant A. Subsequently, the eye contact determination part ECDP determines whether or not the determined eye gazing point that is the point at the screen of the video conference client device VCDA where the participant A looks at, matches with the location on the screen of one of the windows presentations of participant B or C. Now, as participant A is looking at the video stream of participant B it is detected that the determined eye-gazing point matches with the coordinates of the window presentation PB of video stream of participant B.

In addition besides the information on the eye-contact, i.e. participant A is looking at participant B and hence not looking at participant C, the video streams, obtained from the camera's C1, C2, C3, C4 attached to the video conferencing device VCDA, are forwarded towards the video conference server device SED.

Subsequently the View Generating part VGP of the video conferencing server device SED generates a respective view of said first participant for each other participant of said plurality of participants based on said viewing direction of said first participant relative to each other participant of said plurality of participants and using the forwarded video streams of the first participant A.

Since participant A has an eye-contact with participant B in our scenario, VGP calculates based on the video streams of the first participant A a "front view" or "an eye-contact view" of said participant A for participant B by using the view point interpolation technology. And furthermore, based on the relative position of participant C to participant A and participant B. VGP also calculates a respective "side-view" of participant A for participant C.

The generated views are subsequently, by means of the distributing part DP, distributed to VCDB and VCDC.

In this way participant B gets a view of participant A looking at him and participant C gets a view of participant A looking at participant B, which is different from the one on participant B's screen.

In a similar way, C has a view of A and B on his monitor and if A is looking on his screen to C, then on C's screen A will look him straight in the eyes. When A is looking on his screen to B, on C's screen A will look at B and C will see A's cheek. Based on the relative location of A and B on C's screen, C will get a side view of A and B.

It has to be remarked that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

Also, the above description and drawing merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions. Moreover, all statements herein reciting principles, aspects, and embodiments of the invention, as well as specific example thereof, are intended to encompass equivalents thereof.

While the principles of the invention have been described above in connection with specific apparatus, it is to be clearly understood that this description is merely made by way of example and not as a limitation on the scope of the invention, as defined in the appended claims.

## Claims

1. Video conferencing method for establishing a video conference between a plurality of participants, each of said participants being associated with a video conferencing client device (VCDA, VCDB, VCDC), each video conferencing client device (VCDA, VCDB, VCDC) comprising a screen with at least one camera (C1, C2, C3, C4), each said at least one camera generating a video stream of said corresponding participant, each of said video conferencing client device (VCDA, VCDB, VCDC) being coupled to a video conferencing server device (SED) over a communications network (CN), **CHARACTERISED IN THAT** said method further comprises the steps of:
a. determining a viewing direction of a first participant relative to a presentation of each other participant of said plurality of participants on said screen of said first participant;
b. generating a respective view of said first participant for each other participant of said plurality of participants based on said viewing direction of said first participant relative to a presentation of each other participant of said plurality of participants on said screen of said first participant;
c. distributing said respective view of said first participant to each other participant of said plurality of participants.

2. Video conferencing method according to claim 1, **CHARACTERISED IN THAT** said step of determining said viewing direction is made by locating an eye gazing point of said first participant on said screen of said first participant and subsequently comparing said eye-gazing location of said first participant on said screen of said first participant with a window position of said presentation of each other participant of said plurality of participants on said screen of said first participant.

3. Video conferencing system for establishing a video conference between a plurality of video conferencing client devices (VCDA, VCDB, VCDC) each of said video conferencing client devices being associated to a user of a plurality of users, each video conferencing client devices of said plurality of video conferencing client device comprising a screen with at least one camera (C1, C2, C3, C4), each said at least one camera generating a video stream of said corresponding participant, said system further comprising a video conferencing server device (SED) for coupling each video conferencing client devices of said plurality of video conferencing client devices over a communications network (CN), **CHARACTERISED IN THAT** said system further comprises:
a. associatd to each video, conferencing client device of said client conferencing devices, a view direction determination part (VDDP) adapted to determine a viewing direction of a first participant using said video conferenceing client device relative to a presentation of each other participant of said plurality of participants on said screen of said first participant;
b. a view generating part (VGP) adapted to generate a respective view of said first participant for each other participant of said plurality of participants based on said viewing direction of said first participant relative to a presentation of each other participant of said plurality of participants on said screen of said first participant;
c. a distributing part (DP), adapted to distribute said respective view of said first participant generated to each other participant of said plurality of participants.

4. Video conferencing system according to claim 3, **CHARACTERISED IN THAT** said View direction determination part (VDDP) further comprises
a. an eye gazing point determination part (EGPDP), adapted to determine an eye gazing point of said first participant based on said video stream;
b. an eye contact determination part (ECDP), adapted to determine eye contact of said first participant with each other participant of said plurality of participants by comparing said eye-gazing point of said first participant on said screen of said first participant with a window position of each other participant of said plurality of participants.

5. Network element for use in a video conferencing system according to claim 3, **CHARACTERISED IN THAT** said network element comprises a view direction determination part (VDDP), adapted to determine a viewing direction of a first participant relative to a presentation of each other participant of said plurality of participants on said screen of said first participant.

6. Network element use in a video conferencing system according to claim 3, **CHARACTERISED IN THAT** said network element comprises a view Generating part (VGP), adapted to generate a respective view of said first participant for each other participant of said plurality of participants based on said viewing direction of said first participant relative to a presentation of each other participant of said plurality of participants on said screen of said first participant;

7. Network element use in a video conferencing system according to claim 3, **CHARACTERISED IN THAT** said network element comprises a distributing part (DP), adapted to distribute each said respective view of said first participant generated to each other participant of said plurality of participants.

8. Network element according to claims 6 or 7, **CHARACTERISED IN THAT** said network element is said server device (SED).

9. Client Device for use in a video conferencing system according to claim 3, **CHARACTERISED IN THAT** said client device (VCDA) comprises a view direction determination part (VDDP) adapted to determine a viewing direction of a first participant relative to a presentation of each other participant of said plurality of participants on said screen of said first participant.

10. Client device (VCDA) according to claim 9, **CHARACTERISED IN THAT** said view direction determination part (VDDP) of said client device (VCDA) further comprises:
a. an eye gazing point determination part (EGPDP), adapted to determine an eye gazing point of said first participant based on at least one video stream;
b. an eye contact determination part (ECDP), adapted to determine eye contact of said first participant with each other participant of said plurality of participants by comparing said eye-gazing point of said first participant on said screen of said first participant with a window position of said presentation of each other participant of said plurality of participants on said screen of said first participant.

11. Video conferencing system according to claim 3, **CHARACTERISED IN THAT** at least either one of said view generation part (VGP) and said distributing part (DP) is part of said video conferendng server device (SED).
